# FASCICULE DE BREVET EUROPEEN

(11) **EP 3 409 524 B1**
(45) Date de publication et mention de la délivrance du brevet: **28.04.2021**
(21) Numéro de dépôt: 17174396.6
(22) Date de dépôt: 02.06.2017
(51) Int. Cl.: B60K 11/08

(54) **DISPOSITIF DE CONTRÔLE DU FLUX D'AIR DANS UN BLOC MOTEUR DE VÉHICULE AUTOMOBILE**
VORRICHTUNG ZUR KONTROLLE DES LUFTSTROMS IN EINEM MOTORBLOCK EINES KRAFTFAHRZEUGS
AIR FLOW CONTROL DEVICE FOR AN ENGINE BLOCK IN A MOTOR VEHICLE

(43) Date de publication de la demande: 05.12.2018
(73) Titulaire: Flex-N-Gate Germany GmbH, 86633 Neuburg (DE)
(72) Inventeur: CLAPIE, Yann, 85134 Stammham (DE); THOULOUZE, Bertrand, 85080 Gaimersheim (DE); EICHLINGER, Daniel, 85120 Hepberg (DE)
(74) Mandataire: Lavoix

(56) Documents cités:
- EP-A2- 1 270 286
- WO-A1-2014/064083
- DE-A1- 3 836 374
- DE-A1-102012 015 519
- US-A1- 2013 248 265

## Description

La présente invention concerne un dispositif de contrôle d'un flux d'air dans un compartiment de véhicule automobile, le dispositif comprenant :
- au moins un cadre définissant une ouverture, le cadre s'étendant dans un plan transverse, l'ouverture s'étendant selon un axe d'écoulement de l'air sensiblement perpendiculaire au plan transverse ;
- une pluralité de lamelles s'étendant en travers du cadre, les lamelles étant disposées les unes au-dessus des autres ; et
- un actionneur relié à chacune des lamelles par une attache respective ;
chaque lamelle s'étendant dans un plan de déflexion de l'air respectif, et chaque lamelle étant déplaçable par rapport au cadre autour d'un axe de lamelle respectif, au moyen de l'actionneur, entre :
- une position de fermeture, dans laquelle les lamelles coopèrent entre elles pour bloquer le passage de l'air à travers l'ouverture, et
- une position d'ouverture, dans laquelle les lamelles laissent l'air s'écouler à travers l'ouverture, et dans laquelle les plans de déflexion des lamelles s'intersectent les uns les autres en amont du cadre 30 par rapport à l'axe d'écoulement du flux d'air.

L'invention concerne également un véhicule automobile comprenant un tel dispositif.

Il est nécessaire pour le bon fonctionnement des véhicules automobiles de refroidir le moteur afin d'éviter qu'il surchauffe. Pour cela, la plupart des véhicules comprennent un conduit d'aération s'ouvrant sur la face avant et acheminant de l'air environnant jusqu'à un radiateur. Le flux d'air refroidit un liquide caloporteur circulant dans le radiateur et le moteur, dissipant une partie de la chaleur produite par le moteur.

Afin de contrôler le refroidissement de manière optimale, il est connu d'utiliser un système de fermeture et d'ouverture du conduit d'aération, comportant par exemple des ailettes inclinables.

Ce système permet de contrôler le flux d'air allant vers le radiateur en ouvrant plus ou moins le conduit lorsqu'un refroidissement est nécessaire, et en le fermant pour stopper le refroidissement, ce qui permet de réduire le temps de chauffe du moteur lors du démarrage et de diminuer la consommation de carburant, notamment en hiver.

De plus, lorsque la vitesse du véhicule est importante, le flux d'air dans le conduit d'aération est suffisamment important pour perturber l'écoulement de l'air à l'endroit où il est évacué hors du véhicule et créer une force de traînée notable qui peut ralentir le véhicule. Il est alors utile de limiter le flux d'air dans le conduit en le fermant partiellement.

Les dispositifs de contrôle du flux comprenant des ailettes mobiles en rotation sont ainsi avantageux car ils permettent un contrôle amélioré du flux d'air atteignant le radiateur, puisqu'ils peuvent prendre plusieurs configurations intermédiaires entre la fermeture totale et l'ouverture totale.

Il est connu, par exemple du document FR 2997346, d'améliorer ces dispositifs en agençant les lamelles en éventail en position ouverte pour optimiser la diffusion de l'air. En effet, l'air traversant le dispositif de contrôle du flux d'air lorsque celui-ci est ouvert est alors réparti de manière homogène sur l'ensemble de la surface efficace du radiateur. La section efficace du radiateur est en effet généralement plus grande que la section du conduit, et seule une partie réduite du radiateur est refroidie avec les dispositifs antérieurs dans lesquels les ailettes s'étendent parallèles les unes aux autres.

Ces dispositifs peuvent encore être améliorés. En effet, la cinématique d'ouverture et de fermeture d'un tel dispositif à lamelles en éventail est complexe, et nécessite l'utilisation d'un actionneur présentant des trous oblongs. Une telle pièce est complexe à confectionner, et peut se révéler sensible à l'utilisation, l'actionneur pouvant se briser ou les orifices s'encrasser, ce qui perturbe le bon fonctionnement du dispositif. Un autre document connu, DE102012015519, présente une cinématique plus simple, mais ne permettant pas une fermeture totale du passage d'air.

Un but de l'invention est de refroidir efficacement le moteur du véhicule sans pour autant augmenter la quantité d'air circulant à travers le dispositif de contrôle du flux, en utilisant une pièce simple et robuste pour présenter une longévité optimale.

A cet effet, l'invention a pour objet un dispositif du type précité, caractérisé en ce que chaque attache est montée de manière mobile en rotation uniquement sur l'actionneur, autour d'un axe d'actionnement respectif.

Un tel dispositif permet d'avoir une diffusion plus efficace du flux d'air traversant le conduit d'aération, sur l'ensemble de la surface efficace du radiateur situé en aval, et ainsi de refroidir le moteur plus efficacement, tout en restant simple à confectionner et robuste à l'usage, puisque ne nécessitant pas d'articuler les ailettes dans des trous spécifiques prévus sur l'actionneur.

Selon des modes de réalisation alternatifs, le dispositif selon l'invention présente l'une ou plusieurs des caractéristiques suivantes, prise(s) individuellement ou selon toute combinaison techniquement possible :
- les axes d'actionnement des lamelles sont disposés sur une ligne courbe au moins lorsque les lamelles sont en position d'ouverture ;
- lorsque les lamelles sont en position de fermeture, l'actionneur s'étend de manière sensiblement rectiligne, et lorsque les lamelles sont en position d'ouverture, l'actionneur s'étend selon une ligne courbe ;
- l'actionneur est une barrette comprenant des tronçons flexibles ;
- les axes d'actionnement des lamelles sont disposés sur une ligne courbe, déplacée en translation lorsque les lamelles se déplacent entre la position de fermeture et la position d'ouverture ;
- l'actionneur comprend au moins deux tronçons de longueurs différentes, chaque tronçon présentant une extrémité liée à une des attaches ;
- la pluralité de lamelles comprend une lamelle inférieure, le plan de déflexion de la lamelle inférieure formant un angle sensiblement droit avec le plan transverse, lorsque la lamelle inférieure est en position d'ouverture, la pluralité de lamelles comprenant en outre au moins une lamelle supérieure, le plan de déflexion de chaque lamelle supérieure formant un angle non-droit avec le plan transverse, lorsque la lamelle supérieure est en position d'ouverture ;
- le plan de déflexion de chaque lamelle supérieure forme un même angle d'écartement avec le plan de déflexion de la lamelle située directement en dessous ; et
- chaque lamelle présente une distance d'écart non nulle entre l'axe de lamelle et l'axe d'actionnement, la distance d'écart de chaque lamelle étant plus importante que la distance d'écart de la lamelle située directement en-dessous.

L'invention a également pour objet un véhicule automobile comprenant un dispositif tel que défini plus haut, comprenant un compartiment, le compartiment contenant un moteur et un radiateur monté sur le moteur, le compartiment définissant un conduit d'acheminement de l'air jusqu'au radiateur, le véhicule comprenant de plus un dispositif tel que défini ci-dessus disposé en travers du conduit, régulant le flux d'air à travers le conduit.

L'invention sera mieux comprise à la lecture de la description qui suit, donnée uniquement à titre d'exemple, et faite en référence aux dessins annexés, parmi lesquels :
- la figure 1 est une vue en coupe d'un bloc avant d'un véhicule automobile comprenant un dispositif de contrôle du flux d'air selon un mode de réalisation de l'invention ;
- la figure 2 est une vue en coupe détaillée du dispositif de contrôle de la figure 1, lorsque des ailettes sont en position de fermeture ;
- la figure 3 est une vue en coupe détaillée du dispositif de contrôle des figures 1 et 2, lorsque des ailettes sont en position d'ouverture ; et
- les figures 4 et 5 sont des vues en coupe détaillée d'un autre mode de réalisation du dispositif selon l'invention, respectivement en position de fermeture et d'ouverture.

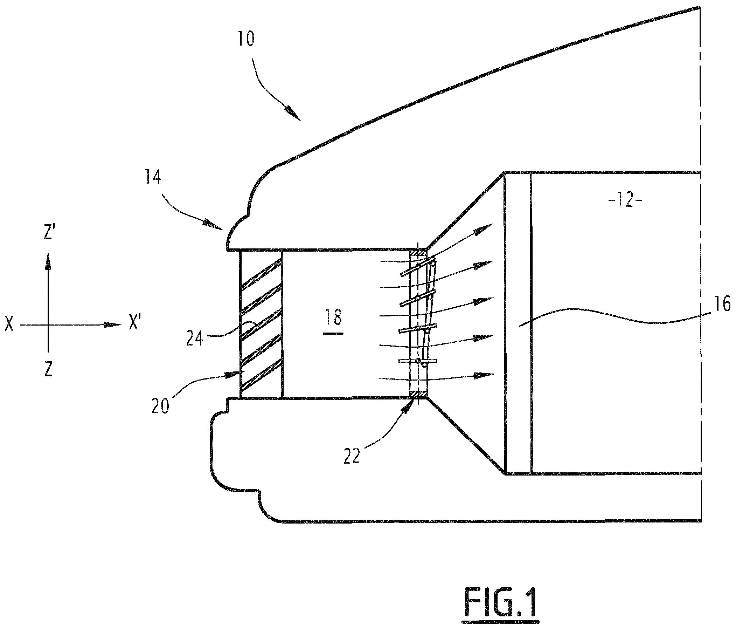

Un véhicule 10 automobile, partiellement représenté sur la figure 1, comprend un compartiment 12 présentant une face avant 14 et contenant un moteur équipé d'un radiateur 16. Dans tout ce qui suit, on utilise les termes « avant » , « arrière », « haut », « bas », « vertical », « horizontal », « transversal » et « longitudinal » en référence au sens de déplacement normal du véhicule automobile 10 dans des conditions usuelles.

Le véhicule 10 est propulsé par le moteur, ce dernier générant de la chaleur au cours de son fonctionnement.

Le radiateur 16 est disposé au voisinage du moteur, et un fluide caloporteur circule entre le moteur et le radiateur 16, pour transmettre la chaleur produite par le moteur au radiateur 16. Le radiateur 16 élimine une partie de la chaleur reçue dans l'air ambiant, notamment par convection et par rayonnement.

Un conduit 18 s'ouvre dans la face avant 14 et est agencé pour acheminer l'air à travers le compartiment 12 jusqu'au radiateur 16. Un flux d'air s'écoule dans le conduit 18 sous l'effet de la convection ayant lieu autour du radiateur 16 qui provoque un appel d'air. Le débit du flux d'air augmente avec la vitesse du véhicule automobile 10 lorsque celui-ci se déplace.

Le conduit 18 s'étend selon un axe X-X' longitudinal d'écoulement de l'air. Le conduit 18 présente par exemple une section rectangulaire. Dans tout ce qui suit, on utilisera les termes d'amont et d'aval par rapport au sens d'écoulement du flux d'air dans le conduit 18, depuis la face avant 14 vers le radiateur 16.

Une grille 20 s'étend en travers du conduit 18 au niveau de la face avant 14, et un dispositif 22 de contrôle du flux d'air est installé dans le conduit 18 en aval de la grille 20.

La grille 20 comprend une pluralité de barreaux 24 s'étendant en travers du conduit 18, agencés pour empêcher des objets volumineux de pénétrer dans le conduit 18 tout en laissant l'air s'écouler à travers la grille 20 depuis l'extérieur du véhicule.

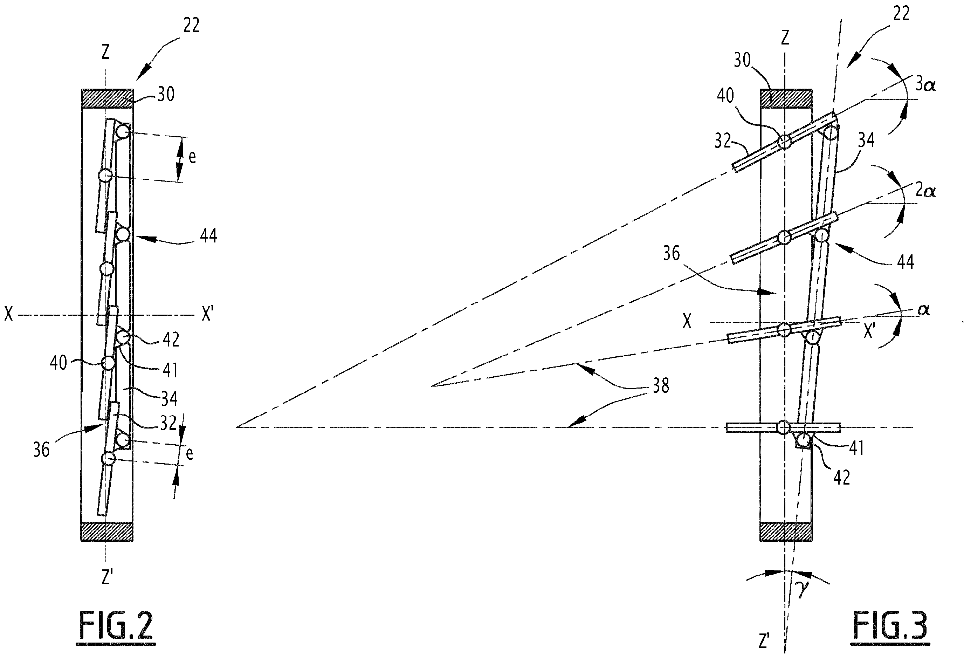

Le dispositif 22 est adapté pour contrôler le flux d'air s'écoulant dans le conduit 18 en direction du radiateur 16. Un premier mode de réalisation du dispositif 22 est représenté en détail sur les figures 2 et 3.

Le dispositif 22 comprend un cadre 30, une pluralité de lamelles 32 disposées en travers du cadre 30, et un actionneur 34 des lamelles 32. Dans l'exemple représenté, le dispositif 22 comprend quatre lamelles 32 identiques. En variante, le dispositif 22 comprend un autre nombre de lamelles 32, par exemple entre deux et douze lamelles 32.

Le cadre 30 est une structure sensiblement rectangulaire, qui est s'étend le long des parois du conduit 18 selon un plan transverse YZ orthogonal à l'axe d'écoulement de l'air X-X'. Le cadre 30 définit une ouverture 36 de section sensiblement rectangulaire dans le plan transverse YZ, de sorte que l'ouverture 36 s'étend à travers le cadre 30, selon l'axe X-X' d'écoulement de l'air.

Les lamelles 32 s'étendent à travers le cadre 30 selon une direction transversale Y-Y' sensiblement orthogonale à l'axe d'écoulement de l'air X-X'. Les lamelles 32 sont disposées les unes au-dessus des autres, alignées selon une direction d'élévation Z-Z' orthogonale à l'axe d'écoulement de l'air X-X' et à la direction transversale Y-Y'. Chaque lamelle 32 a une ou deux lamelles 32 voisines, c'est-à-dire situées immédiatement au-dessus ou au-dessous d'elle. La direction transversale Y-Y' est par exemple horizontale et la direction d'élévation Z-Z' est par exemple verticale.

La pluralité de lamelles 32 comprend une lamelle 32 inférieure et au moins une lamelle 32 supérieure, par exemple trois lamelles 32 supérieures dans le mode de réalisation représenté. La lamelle 32 inférieure est la lamelle 32 située le plus bas selon la direction d'élévation Z-Z'. Les lamelles 32 supérieures sont les lamelles 32 situées au-dessus de la lamelle 32 inférieure selon la direction d'élévation Z-Z'.

Chaque lamelle 32 s'étend dans un plan de déflexion 38 de l'air respectif, le long duquel la lamelle 32 redirige une partie du flux d'air traversant le cadre 30. Ainsi, lorsque le flux d'air glisse sur la lamelle 32, il est réorienté selon le plan de déflexion 38.

Chaque lamelle 32 est montée mobile en rotation autour d'un axe de lamelle 40 respectif par rapport au cadre 30.

L'actionneur 34 est une bielle allongée liée à chacune des lamelles 32 par une attache 41, faisant saillie depuis la lamelle 32. L'actionneur 34 est agencé pour déplacer les lamelles entre une position de fermeture représentée sur la figure 2 et une position d'ouverture représentée sur la figure 3.

Dans la position de fermeture, les lamelles 32 coopèrent entre elles pour bloquer l'écoulement de l'air à travers l'ouverture 36. C'est-à-dire qu'en position de fermeture, chaque lamelle 32 est en contact avec chaque lamelle 32 voisine, de façon à empêcher le passage de l'air entre les deux lamelles 32, et les lamelles 32 ferment le cadre 30.

Dans la position d'ouverture, les lamelles 32 laissent l'air s'écouler à travers l'ouverture 36. C'est-à-dire qu'en position d'ouverture, chaque lamelle 32 est à l'écart de chaque lamelle 32 voisine, de façon à laisser libre un espace d'écoulement de l'air entre les deux lamelles 32.

L'actionneur 34 est articulé à chaque lamelle 32 par une liaison pivot située à une extrémité de l'attache 41, autour d'un axe d'actionnement 42 respectif. L'articulation de l'attache 41 sur l'actionneur 34 se fait uniquement en rotation autour de l'axe d'actionnement 42. On entend par là que l'axe d'actionnement 42 n'est pas mobile en translation par rapport à l'actionneur 34.

L'axe d'actionnement 42 est décalé par rapport à l'axe de lamelle 40 de sorte qu'une translation longitudinale de l'actionneur 34 entraîne la rotation de chaque lamelle 32 autour de son axe de lamelle 40 respectif. L'axe d'actionnement 42 et l'axe de lamelle 40 sont parallèles entre eux, et séparés d'une distance d'écart e.

La distance d'écart e de chaque lamelle 32 supérieure est plus importante que la distance d'écart e de la lamelle 32 située directement en-dessous, comme cela est visible sur la figure 2.

Les lamelles 32 sont agencées, lorsqu'elles sont en position d'ouverture, pour diffuser le flux d'air en direction du radiateur 16. Le plan de déflexion 38 des lamelles 32 ne sont pas parallèles, mais s'intersectent les uns les autres en amont du cadre 30, de sorte que les lamelles 32 sont disposées en éventail en position d'ouverture.

Dans l'exemple représenté, le plan de déflexion de la lamelle 32 inférieure forme un angle droit avec le plan transverse YZ, et les plans de déflexion des lamelles 32 supérieures forment des angles non-droits avec le plan transverse YZ.

Avantageusement, chaque plan de déflexion 38 intersecte le ou les plans de déflexion 38 des lamelles 32 voisines selon un même angle d'écartement α. Par exemple, l'angle d'écartement α est compris entre 5° et 20°, notamment égal à 10°.

Dans le premier mode de réalisation des figures 2 et 3, l'actionneur 34 est adapté pour se déformer lors du passage des lamelles 32 de la position de fermeture à la position d'ouverture.

En effet, l'agencement des lamelles 32 en position d'ouverture et le caractère linéaire de l'actionneur 34 rendent la cinématique de passage de la position de fermeture à la position d'ouverture hyperstatique. La flexibilité de l'actionneur 34 permet de pallier ce problème sans avoir recours à des systèmes plus complexes comme ceux comportant des trous oblongs.

L'actionneur 34 est par exemple une barrette comprenant des tronçons flexibles 44 le long de son étendue, pour permettre une déformation plus facile. Les tronçons flexibles 44 sont par exemple situés au niveau des axes d'actionnement 42 de certaines des lamelles 32, par exemple au niveau de la deuxième et de la troisième lamelle 32 dans l'exemple représenté sur les figures 2 et 3.

Les tronçons flexibles 44 présentent par exemple une section réduite, réalisée au moyen d'une encoche ou d'une gorge dans la structure de l'actionneur 34.

L'actionneur 34 s'étend de manière sensiblement rectiligne lorsque les lamelles 32 sont en position de fermeture et s'étend selon une ligne courbe lorsque les lamelles 32 sont en position d'ouverture.

Ainsi, les axes d'actionnement 42 des lamelles 32 sont alignés selon la direction d'élévation Z-Z' lorsque les lamelles 32 sont en position de fermeture, et disposés suivant la ligne courbe lorsque les lamelles 32 sont en position d'ouverture. Par cela, on entend que les axes d'actionnement 42 ne sont pas alignés dans un plan XZ orthogonal aux axes de lamelle 40, lorsque les lamelles 32 sont en position d'ouverture.

La ligne courbe est par exemple un arc de cercle.

Dans l'exemple représenté, les axes d'actionnement 42 de la deuxième et de la troisième lamelle 32 sont décalés vers l'aval par la déformation de l'actionneur 34, lorsque les lamelles 32 sont en position d'ouverture. C'est-à-dire que les axes d'actionnement 42 de la deuxième et de la troisième lamelle 32 sont situés à une distance non-nulle, par exemple comprise entre 0,2 mm et 0,4 mm, de la droite passant par les axes d'actionnement 42 de la première et de la quatrième lamelle 32.

Dans ce mode de réalisation, l'actionneur 34 s'étend de manière sensiblement rectiligne et parallèle au plan transverse YZ lorsque les lamelles 32 sont en position d'ouverture, et selon la ligne courbe lorsque les lamelles 32 sont en position de fermeture, la ligne courbe intersectant le plan transverse selon un angle d'inclinaison γ non nul, notamment compris entre 3° et 15°.

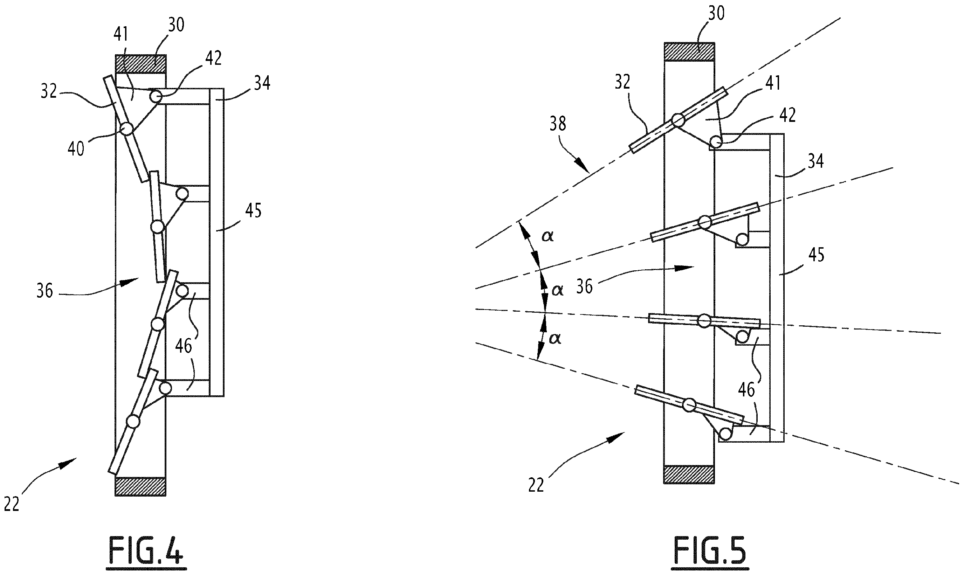

Un deuxième mode de réalisation du dispositif 22, représenté sur les figures 4 et 5, va maintenant être décrit. Ce deuxième mode de réalisation est semblable au premier mode décrit plus haut, à l'exception des différences décrites ci-après.

Dans le deuxième mode de réalisation, l'actionneur 34 ne se déforme pas notablement lors du passage des lamelles 32 de la position de fermeture représentée sur la figure 4 à la position d'ouverture représentée sur la figure 5.

Dans le deuxième mode de réalisation, les axes de lamelle 40 ne sont pas alignés selon une direction parallèle au plan transverse YZ, mais sont disposés selon une ligne courbe, avec par exemple les axes de lamelle 40 de la deuxième et de la troisième lamelle 32 situés plus en aval que les axes de lamelle 40 de la première et de la quatrième lamelle 32.

De plus, les axes d'actionnement 42 des lamelles 32 sont disposés suivant une même ligne courbe, déplacée en translation lorsque les lamelles 32 passent de la position d'ouverture à la position de fermeture et inversement. C'est-à-dire que chacun des axes d'actionnement 42 suit la même translation lorsque les lamelles 32 sont déplacées de la position d'ouverture à la position de fermeture ou inversement.

Dans l'exemple représenté, l'actionneur 34 comprend un tronçon principal 45 et une pluralité de tronçons secondaires 46 reliés de manière sensiblement orthogonale au tronçon principal 45 par une première extrémité. Les tronçons secondaires 46 sont articulés aux attaches 41 à leur autre extrémité, autour des axes d'actionnement 42. Les tronçons secondaires 46 présentent des longueurs différentes les uns des autres.

Le tronçon principal 45 s'étend de manière sensiblement parallèle au plan transverse YZ, et les tronçons secondaires 46 s'étendent de manière sensiblement orthogonale au plan transverse YZ, lorsque les lamelles 32 sont en position de fermeture et lorsqu'elles sont en position d'ouverture.

Le dispositif 22 décrit permet d'avoir une diffusion plus efficace du flux d'air traversant le conduit 18, sur l'ensemble de la surface efficace du radiateur 16 situé en aval, et ainsi de refroidir le moteur plus efficacement. Le dispositif 22 reste simple à confectionner et robuste à l'usage, notamment grâce à la forme et à la flexibilité de l'actionneur 34.

## Revendications

1. Dispositif (22) de contrôle d'un flux d'air dans un compartiment (12) de véhicule automobile (10), le dispositif (22) comprenant :
- au moins un cadre (30) définissant une ouverture (36), le cadre (30) s'étendant dans un plan transverse (YZ), l'ouverture (36) s'étendant selon un axe d'écoulement de l'air (X-X') sensiblement perpendiculaire au plan transverse (YZ) ;
- une pluralité de lamelles (32) s'étendant en travers du cadre (30), les lamelles (32) étant disposées les unes au-dessus des autres ; et
- un actionneur (34) relié à chacune des lamelles (32) par une attache (41) respective ;
chaque lamelle (32) s'étendant dans un plan de déflexion (38) de l'air respectif, et chaque lamelle (32) étant déplaçable par rapport au cadre (30) autour d'un axe de lamelle (40) respectif, au moyen de l'actionneur (34), entre :
- une position de fermeture, dans laquelle les lamelles (32) coopèrent entre elles pour bloquer le passage de l'air à travers l'ouverture (36), et
- une position d'ouverture, dans laquelle les lamelles (32) laissent l'air s'écouler à travers l'ouverture (36), et dans laquelle les plans de déflexion (38) des lamelles (32) s'intersectent les uns les autres en amont du cadre (30) par rapport à l'axe d'écoulement du flux d'air (X-X'),
**caractérisé en ce que** chaque attache (41) est montée de manière mobile en rotation uniquement sur l'actionneur (34), autour d'un axe d'actionnement (42) respectif.

2. Dispositif (22) selon la revendication 1, dans lequel les axes d'actionnement (42) des lamelles (32) sont disposés sur une ligne courbe au moins lorsque les lamelles (32) sont en position d'ouverture.

3. Dispositif (22) la revendication 1 ou 2, dans lequel, lorsque les lamelles (32) sont en position de fermeture, l'actionneur (34) s'étend de manière sensiblement rectiligne, et lorsque les lamelles (32) sont en position d'ouverture, l'actionneur (34) s'étend selon une ligne courbe.

4. Dispositif (22) selon la revendication 3, dans lequel l'actionneur (34) est une barrette comprenant des tronçons flexibles (44).

5. Dispositif (22) la revendication 1 ou 2, dans lequel les axes d'actionnement (42) des lamelles (32) sont disposés sur une ligne courbe, déplacée en translation lorsque les lamelles (32) se déplacent entre la position de fermeture et la position d'ouverture.

6. Dispositif (22) selon la revendication 5, dans lequel l'actionneur (34) comprend au moins deux tronçons (46) de longueurs différentes, chaque tronçon (46) présentant une extrémité liée à une des attaches (41).

7. Dispositif (22) selon l'une quelconque des revendications 1 à 6, dans lequel la pluralité de lamelles (32) comprend une lamelle (32) inférieure, le plan de déflexion (38) de la lamelle (32) inférieure formant un angle sensiblement droit avec le plan transverse (YZ), lorsque la lamelle (32) inférieure est en position d'ouverture, la pluralité de lamelles (32) comprenant en outre au moins une lamelle (32) supérieure, le plan de déflexion (38) de chaque lamelle (32) supérieure formant un angle non-droit avec le plan transverse (YZ), lorsque la lamelle (32) supérieure est en position d'ouverture.

8. Dispositif (22) selon la revendication 7, dans lequel le plan de déflexion (38) de chaque lamelle (32) supérieure forme un même angle d'écartement (α) avec le plan de déflexion (38) de la lamelle (32) située directement en dessous.

9. Dispositif (22) selon l'une quelconque des revendications 1 à 8, dans lequel chaque lamelle (32) présente une distance d'écart (e) non nulle entre l'axe de lamelle (40) et l'axe d'actionnement (41), la distance d'écart (e) de chaque lamelle (32) étant plus importante que la distance d'écart (e) de la lamelle (32) située directement en-dessous.

10. Véhicule (10) automobile comprenant un dispositif selon l'une quelconque des revendications 1 à 9, comprenant un compartiment (12), le compartiment contenant un moteur et un radiateur (16) monté sur le moteur, le compartiment (12) définissant un conduit (18) d'acheminement de l'air jusqu'au radiateur (16), le véhicule (10) comprenant de plus un dispositif (22) selon l'une quelconque des revendication 1 à 9 disposé en travers du conduit (18), régulant le flux d'air à travers le conduit (18).

## Patentansprüche

1. Vorrichtung (22) zum Steuern eines Luftstroms in einem Innenraum (12) eines Kraftfahrzeuges (10), wobei die Vorrichtung (22) umfasst:
- mindestens einen Rahmen (30), der eine Öffnung (36) begrenzt, wobei der Rahmen (30) sich in einer Querebene (YZ) erstreckt und die Öffnung (36) sich gemäß einer Luftströmungsachse (X-X') im Wesentlichen senkrecht zur Querebene (YZ) erstreckt;
- eine Mehrzahl von Lamellen (32), die sich quer über den Rahmen (30) erstrecken, wobei die Lamellen (32) übereinander angeordnet sind; und
- eine Stellvorrichtung (34), die mit jeder der Lamellen (32) durch eine jeweilige Befestigung (41) verbunden ist;
wobei jede Lamelle (32) sich in einer jeweiligen Ebene (38) zum Ablenken der Luft erstreckt und jede Lamelle (32) in Bezug auf den Rahmen (30) um eine jeweilige Lamellenachse (40) mittels der Stellvorrichtung (34) bewegbar ist zwischen:
- einer Schließstellung, in der die Lamellen (32) zusammenarbeiten, um den Durchgang der Luft durch die Öffnung (36) zu blockieren, und
- einer Offenstellung, in der die Lamellen (32) die Luft durch die Öffnung (36) strömen lassen und in der die Ablenkebenen (38) der Lamellen (32) sich miteinander stromaufwärts zum Rahmen (30) in Bezug auf die Strömungsachse des Luftstroms (X-X') schneiden,
**dadurch gekennzeichnet, dass** jede Befestigung (41) in drehbeweglicher Weise nur an der Stellvorrichtung (34) um eine jeweilige Betätigungsachse (42) montiert ist.

2. Vorrichtung (22) nach Anspruch 1, bei der die Betätigungsachsen (42) der Lamellen (32) auf einer gekrümmten Linie, zumindest wenn die Lamellen (32) in der Offenstellung sind, angeordnet sind.

3. Vorrichtung (22) nach Anspruch 1 oder 2, bei der, wenn die Lamellen (32) in der Schließstellung sind, die Stellvorrichtung (34) sich im Wesentlichen gradlinig erstreckt und wenn die Lamellen (32) in der Offenstellung sind, sich die Stellvorrichtung (34) gemäß einer gekrümmten Linie erstreckt.

4. Vorrichtung (22) nach Anspruch 3, bei der die Stellvorrichtung (34) als Leiste mit flexiblen Abschnitten (44) ausgebildet ist.

5. Vorrichtung (22) nach Anspruch 1 oder 2, bei der die Betätigungsachsen (42) der Lamellen (32) auf einer gekrümmten Linie angeordnet sind, die translatorisch versetzt ist, wenn die Lamellen (32) sich zwischen der Schließstellung und der Offenstellung bewegen.

6. Vorrichtung (22) nach Anspruch 5, bei der die Stellvorrichtung (34) mindestens zwei Abschnitte (46) von unterschiedlicher Länge umfasst, wobei jeder Abschnitt (46) ein an eine der Befestigungen (41) gebundenes Ende aufweist.

7. Vorrichtung (22) nach einem beliebigen der Ansprüche 1 bis 6, bei der die Mehrzahl von Lamellen (32) eine untere Lamelle (32) umfasst, wobei die Ablenkebene (38) der unteren Lamelle (32) einen im Wesentlichen rechten Winkel mit der Querebene (YZ) bildet, wenn die untere Lamelle (32) in der Offenstellung ist, wobei die Mehrzahl der Lamellen (32) außerdem mindestens eine obere Lamelle (32) umfasst, wobei die Ablenkebene (38) jeder oberen Lamelle (32) keinen rechten Winkel mit der Querebene (YZ) bildet, wenn die obere Lamelle (32) in der Offenstellung ist.

8. Vorrichtung (22) nach Anspruch 7, bei der die Ablenkebene (38) jeder oberen Lamelle (32) einen selben Abstandswinkel (a) mit der Ablenkebene (38) der direkt darunterliegenden Lamelle (32) bildet.

9. Vorrichtung (22) nach einem beliebigen der Ansprüche 1 bis 8, bei der jede Lamelle (32) einen Abstand (e) zwischen der Lamellenachse (40) und der Betätigungsachse (41) aufweist, der nicht Null ist, wobei der Abstand (e) jeder Lamelle (32) größer ist als der Abstand (e) der direkt darunterliegenden Lamelle (32).

10. Kraftfahrzeug (10) mit einer Vorrichtung nach einem beliebigen der Ansprüche 1 bis 9, das einen Innenraum (12) umfasst, wobei der Innenraum einen Motor und einen an dem Motor montierten Kühler (16) enthält, wobei der Innenraum (12) einen Kanal (12) zum Leiten der Luft bis zum Kühler (16) definiert, wobei das Fahrzeug (10) zusätzlich eine Vorrichtung (22) nach einem beliebigen der Ansprüche 1 bis 9 umfasst, die quer zum Kanal (18) angeordnet ist und den Luftstrom durch den Kanal (18) regelt.

## Claims

1. A device (22) for controlling an air flow in a motor vehicle (10) compartment (12), the device (22) comprising:
- at least one frame (30) defining an opening (36), the frame (30) extending in a transverse plane (YZ), the opening (36) extending along a flow axis of the air (X-X') substantially perpendicular to the transverse plane (YZ);
- a plurality of slats (32) extending across the frame (30), the slats (32) being arranged above one another; and
- an actuator (34) connected to each of the slats (32) by a respective fastener (41);
each slat (32) extending in a respective air deflection plane (38), and each slat (32) being movable relative to the frame (30) around a respective slat axis (40), using the actuator (34), between:
- a closed position, in which the slats (32) cooperate with one another to block the passage of the air through the opening (36), and
- an open position, in which the slats (32) allow the air to flow through the opening (36), and in which the deflection planes (38) of the slats (32) intersect one another upstream from the frame (30) relative to the flow axis (X-X') of the air flow,
**characterized in that** each fastener (41) is mounted rotatably only on the actuator (34), around a respective actuating axis (42).

2. The device (22) according to claim 1, wherein the actuating axes (42) of the slats (32) are arranged on a curved line at least when the slats (32) are in the open position.

3. The device (22) according to claim 1 or 2, wherein, when the slats (32) are in the closed position, the actuator (34) extends substantially rectilinearly, and when the slats (32) are in the closed position, the actuator (34) extends over a curved line.

4. The device (22) according to claim 3, wherein the actuator (34) is a strip comprising flexible segments (44).

5. The device (22) according to claim 1 or 2, wherein the actuating axes (42) of the slats (32) are arranged on a curved line, translated when the slats (32) move between the closed position and the open position.

6. The device (22) according to claim 5, wherein the actuator (34) comprises at least two segments (46) with different lengths, each segment (46) having one end connected to one of the fasteners (41).

7. The device (22) according to any one of claims 1 to 6, wherein the plurality of slats (32) comprises a lower slat (32), the deflection plane (38) of the lower slat (32) forming a substantially right angle with the transverse plane (YZ), when the lower slat (32) is in the open position, the plurality of slats (32) further comprising at least one upper slat (32), the deflection plane (38) of each upper slat (32) forming a non-right angle with the transverse plane (YZ), when the upper slat (32) is in the open position.

8. The device (22) according to claim 7, wherein the deflection plane (38) of each upper slat (32) forms a same separation angle (α) with the deflection plane (38) of the slat (32) located directly below.

9. The device (22) according to any one of claims 1 to 8, wherein each slat (32) has a nonzero separation distance (e) between the slat axis (40) and the actuating axis (41), the separation distance (e) of each slat (32) being greater than the separation distance (e) of the slat (32) located directly below.

10. A motor vehicle (10) comprising a device according to any one of claims 1 to 9, comprising a compartment (12), the compartment containing an engine and a radiator (16) mounted on the engine, the compartment (12) defining a duct (18) for conveying air to the radiator (16), the vehicle (10) additionally comprising a device (22) according to any one of claims 1 to 9 arranged through the duct (18), regulating the flow of air through the duct (18).
